# EUROPEAN PATENT APPLICATION

(11) **EP 4 123 545 A1**
(43) Date of publication of application: **25.01.2023**
(21) Application number: 20925605.6
(22) Date of filing: 18.06.2020
(51) Int. Cl.: G06Q 30/02

(54) **ADVERTISEMENT DELIVERY METHOD AND ADVERTISEMENT DELIVERY SYSTEM**

(30) Priority: 16.03.2020 JP 2020045725
(71) Applicant: DENTSU INC., Tokyo 105-7001 (JP)
(72) Inventor: TAKEUCHI, Yoshifumi, Tokyo 105-7050 (JP)
(74) Representative: Berggren Oy
(86) International application number: PCT/JP2020/023952
(87) International publication number: WO 2021/186753

(57) **Abstract**

An ad delivery system for delivering an advertisement for first content to a first terminal determines, based on a first profile for verifying a provider of the first content, whether to permit provision of the advertisement for the first content when the first content is requested by the first terminal.

## Description

### TECHNICAL FIELD

The present invention relates to ad delivery methods and ad delivery systems.

### BACKGROUND ART

Conventionally, there is known a technique for providing an advertisement to content such as a web page by bidding or the like (for example, see Patent Literature 1).

### CITATION LIST

### PATENT LITERATURE

Patent Literature 1: Japanese Patent Laid-Open No. 2019-220052

### SUMMARY OF INVENTION

### TECHNICAL PROBLEM

However, a problem of the related art is that an advertisement may be provided to media, for example, websites, SNSs, and the like, which provide inappropriate content such as fake news, content infringing on another's copyright, content containing personal information, and the like.

In one aspect, an object of the present disclosure is to provide a technique that allows an advertisement to be provided appropriately.

### SOLUTION TO PROBLEM

One proposal provides an ad delivery method wherein an ad delivery system for delivering an advertisement for first content to a first terminal determines, based on a first profile for verifying a provider of the first content, whether to permit provision of the advertisement for the first content when the first content is requested by the first terminal.

### ADVANTAGEOUS EFFECTS OF INVENTION

According to an aspect, an advertisement can be provided appropriately.

### BRIEF DESCRIPTION OF DRAWINGS

FIG. 1 is a view illustrating an example of the configuration of an ad delivery system according to an embodiment;
FIG. 2 is a block diagram illustrating an example of the hardware configuration of each of terminals, content servers, ad servers, advertiser servers, and a history server according to the embodiment;
FIG. 3 is a block diagram illustrating the respective functional configurations of the terminal, the content server, the ad server, and the advertiser server;
FIG. 4A is a sequence diagram illustrating an example of processing of the ad delivery system according to the embodiment;
FIG. 4B is a sequence diagram illustrating an example of the processing of the ad delivery system according to the embodiment;
FIG. 5A is a view for explaining an example of a display screen of the terminal according to the embodiment;
FIG. 5B is a view for explaining an example of the display screen of the terminal according to the embodiment;
FIG. 5C is a view for explaining an example of the display screen of the terminal according to the embodiment;
FIG. 5D is a view for explaining an example of the display screen of the terminal according to the embodiment;
FIG. 5E is a view for explaining an example of the display screen of the terminal according to the embodiment;
FIG. 6A is a view for explaining an example of the display screen of the terminal according to the embodiment; and
FIG. 6B is a view for explaining an example of the display screen of the terminal according to the embodiment.

### DESCRIPTION OF EMBODIMENTS

An embodiment of the present disclosure will be described with reference to the drawings.

### <System Configuration>

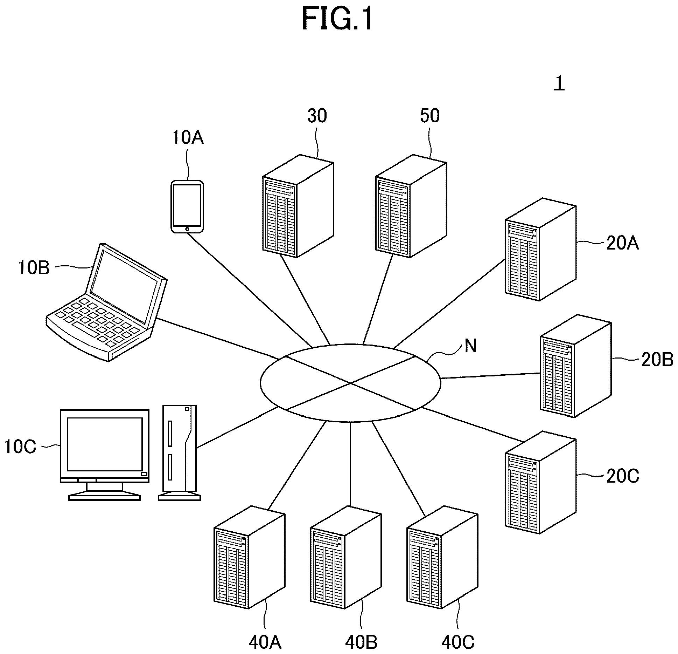

FIG. 1 is a view illustrating an example of the configuration of an ad delivery system 1 according to the embodiment. In FIG. 1, the ad delivery system 1 includes a terminal 10A (an example of a "first terminal"), a terminal 10B (an example of a "second terminal"), and a terminal 10C (these terminals will be simply referred to as "terminals 10" hereinafter when distinction is unnecessary), and a content server 20A, a content server 20B, and a content server 20C (these servers will be simply referred to as "content servers 20" hereinafter when distinction is unnecessary). The ad delivery system 1 also includes an ad server 30, an advertiser server 40A, an advertiser server 40B, and an advertiser server 40C (these advertiser servers will be simply referred to as "advertiser servers 40" when distinction is unnecessary), and a log server 50.

Note that the number of devices which may be arranged as the terminals 10, the content servers 20, the ad server 30, the advertiser servers 40, and the log server 50 is not limited to that exemplified in FIG. 1. Note that the ad server 30 and the advertiser servers 40 are examples of "ad delivery servers".

The terminals 10, the content servers 20, the ad server 30, the advertiser servers 40, and the log server 50 are communicably coupled to each other by a communication network N such as the Internet, a wireless local area network (LAN), a cell phone network, and the like.

The terminals 10 are information processing apparatuses, for example, smartphones, tablet terminals, personal computers (PCs), and the like. Each terminal 10 displays, via a web browser or an application, content acquired from the content server 20 in response to an operation performed by a user.

The content servers 20, the ad server 30, the advertiser servers 40, and the log server 50 are, for example, information processing apparatuses such as server computers, personal computers, and the like.

Each content server 20 may be, for example, a web server that displays content of web pages such as articles, blogs, and the like and content of a social networking service (SNS) on the terminals 10.

In this case, the content server 20 may transmit a specified piece of content to the terminal 10 in response to an acquisition request that specifies the identification information about the content and is transmitted from a web browser, an SNS application, or the like of the terminal 10. In this case, the identification information about the specified piece of content may be, for example, a uniform resource locator (URL). The acquisition request may be, for example, a hypertext transfer protocol (HTTP) request. The content server 20 may include the information about the specified piece of content in an HTML document, which is the information about the web page corresponding to the designated URL, and return the HTML document to the terminal 10.

The ad server 30 is a server that employs, for example, a method such as real-time bidding (RTB) to deliver advertisements of the entities operating the advertiser servers 40 to terminals 10 that access the content servers 20. The ad server 30 may be implemented by a plurality of servers. In such a case, the ad server 30 may include servers of entities which provide supply side platforms (SSPs) which are platforms for maximizing the profits on the side of content providers that display content on which advertisements are displayed. The ad server 30 may also include servers of various entities that act as ad exchanges for delivering advertisements to respective ad spaces of ad networks which include a plurality of SSPs and the like. Furthermore, the ad server 30 may include an ad server which delivers advertisements to websites.

Each advertiser server 40 is a server for delivering advertisements to the terminals 10 via the ad server 30. The advertiser servers 40 may include respective servers of entities that provide demand-side platforms (DSPs) for optimizing the effects of the advertisements of the respective advertisers. The advertiser servers 40 may include, for example, servers operated by advertiser entities or advertising agencies of the advertiser entities.

The log server 50 is a server for recording logs about reproduction of content, information about each advertisement delivered for the content, and the like. The log server 50 may be, for example, a database server operated by a predetermined institution. The log server 50 may be, for example, a distributed ledger server that records information by blockchain (distributed ledger). In such a case, it may be arranged such that each of the various processing operations by the distributed ledger server is executed by a corresponding program (decentralized application [DApp]) which is stored as a smart contract and operates on the distributed ledger server.

### <Hardware Configuration>

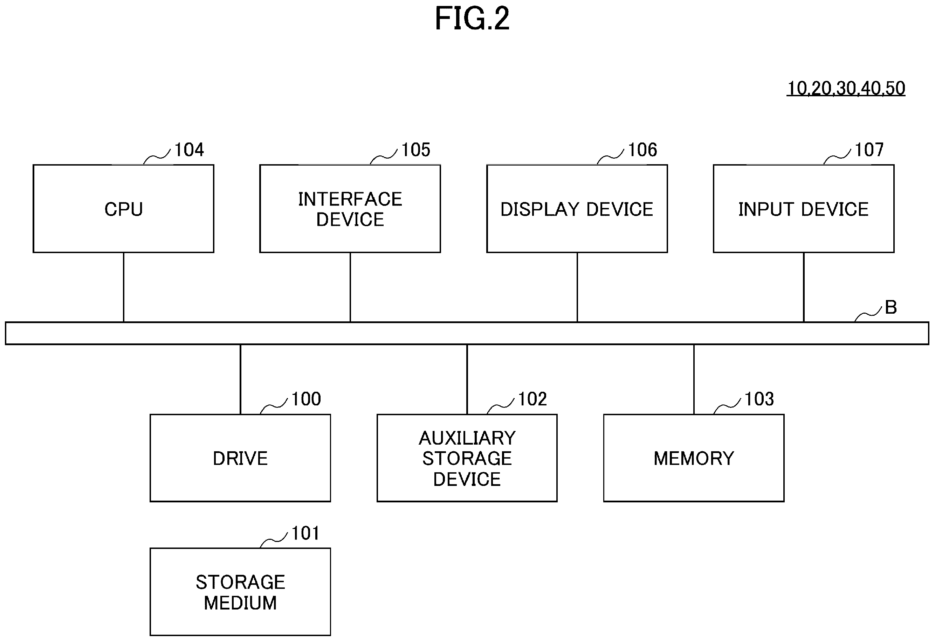

FIG. 2 is a block diagram illustrating an example of the hardware configuration of each of the terminals 10, the content servers 20, the ad server 30, the advertiser servers 40, and the log server 50. A description will be given hereinafter by using the terminal 10 as an example. The hardware configuration of each of the content servers 20, the ad server 30, the advertiser servers 40, and the log server 50 may be similar to the hardware configuration of the terminal 10 illustrated in FIG. 2.

The terminal 10 illustrated in FIG. 2 includes, a drive 100, an auxiliary storage device 102, a memory 103, a CPU 104, an interface device 105, a display device 106, and an input device 107, and the like which are connected to each other via a bus B.

A storage medium 101 provides programs for implementing processing in the terminal 10. When the storage medium 101 that stores the programs is set in the drive 100, the programs are installed from the storage medium 101 to the auxiliary storage device 102 via the drive 100. Note that the installation of the programs need not always be performed by the storage medium 101. The programs may also be downloaded by another computer via a network. In addition to storing the installed programs, the auxiliary storage device 102 also stores necessary files and data.

When activation of a program is instructed, the memory 103 reads the program from the auxiliary storage device 102 and stores the program. The CPU 104 implements functions related to the terminal 10 in accordance with the program stored in the memory 103. The interface device 105 is used as an interface for connecting to a network. The display device 106 is a display for displaying a graphical user interface (GUI) of each program. The input device 107 receives inputs of various operation instructions. The input device 107 may include, for example, a microphone for collecting sound, a keyboard for receiving inputs of letters or the like when keys are pressed by a user, and the like.

Note that an example of the storage medium 101 may be a portable storage medium such as a CD-ROM, a DVD disc, a USB memory, or the like. An example of the auxiliary storage device 102 may be, for example, a hard disk drive (HDD), a flash memory, or the like. The storage medium 101 and the auxiliary storage device 102 each correspond to a computer-readable storage medium.

### <Functional Configuration>

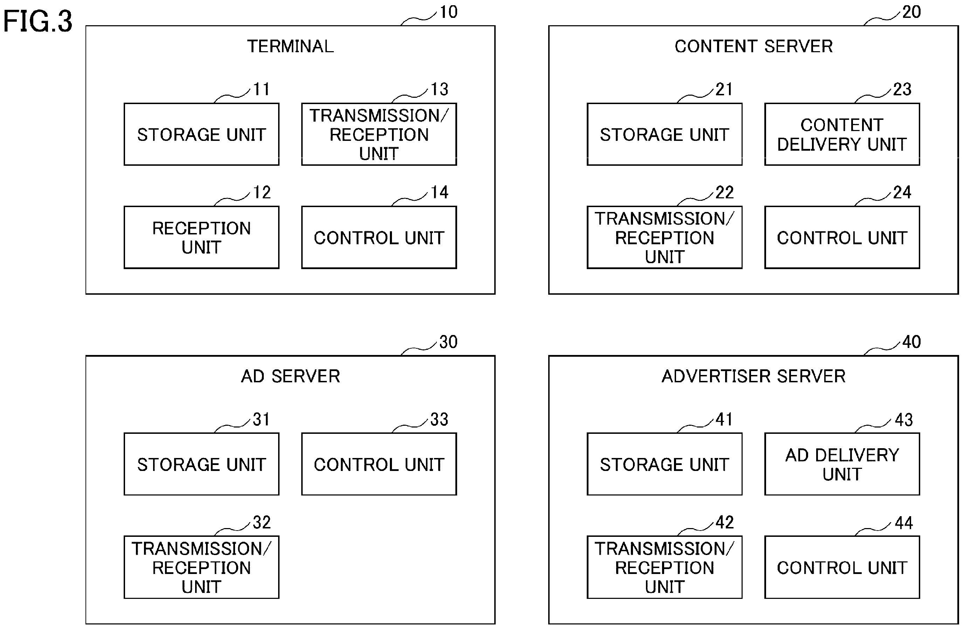

The functional configurations of each terminal 10, each content server 20, the ad server 30, and each advertiser server 40 will be described next with reference to FIG. 3. FIG. 3 is a block diagram illustrating an example of the respective functional configurations of the terminal 10, the content server 20, the ad server 30, and the advertiser server 40.

### <<Terminal 10>>

Each terminal 10 includes a storage unit 11, a reception unit 12, a transmission/reception unit 13, and a control unit 14. Each of these units may be implemented by the cooperation of one or more programs installed in the terminal 10 and hardware such as the CPU 104 of the terminal 10.

The storage unit 11 may store, for example, user profiles and the like. The reception unit 12 receives various types of operation from a user of the terminal 10. The transmission/reception unit 13 transmits and receives data to and from external devices such as the content servers 20 and the advertiser servers 40. The control unit 14 controls each unit of the terminal 10.

### <Content Server 20>

Each content server 20 includes a storage unit 21, a transmission/reception unit 22, a content delivery unit 23, and a control unit 24. Each of these units may be implemented by the cooperation of one or more programs installed in the content server 20 and hardware such as the CPU of the content server 20.

The storage unit 21 may store, for example, profiles (for example, publisher profiles) of content providers (for example, publishers, bloggers, and the like). The transmission/reception unit 22 transmits and receives data to and from external devices such as the terminals 10, the ad server 30, and the like. The content delivery unit 23 delivers content to the terminals 10. The control unit 24 controls each unit of the content server 20.

### <Ad Server>

The ad server 30 includes a storage unit 31, a transmission/reception unit 32, and a control unit 33. Each of these units may be implemented by the cooperation of one or more programs installed in the ad server 30 and hardware such as the CPU of the ad server 30.

The storage unit 31 stores various types of information. The storage unit 31 may store, for example, respective profiles (platform profiles) of entities (platforms) providing the platforms for delivering advertisements. The transmission/reception unit 32 transmits and receives data to and from external devices such as the content servers 20, the advertiser servers 40, and the like. The control unit 33 controls each unit of the ad server 30.

### <Advertiser server 40>

Each advertiser server 40 includes a storage unit 41, a transmission/reception unit 42, an ad delivery unit 43, and a control unit 44. Each of these units may be implemented by the cooperation of one or more programs installed in the advertiser server 40 and hardware such as the CPU of the advertiser server 40.

The storage unit 41 stores various types of information. The storage unit 41 may store, for example, profiles (advertiser profiles) of advertising providers (advertisers) that provide advertisements to content. The storage unit 41 may also store, for example, profiles (ad agency profiles) of advertising companies (ad agencies) that are the agencies of the advertisements. The transmission/reception unit 42 transmits and receives data to and from external devices such as the ad server 30, the terminals 10, and the like. The ad delivery unit 43 delivers advertising content to the terminals 10. The control unit 44 controls each unit of the advertiser server 40.

### <Processing>

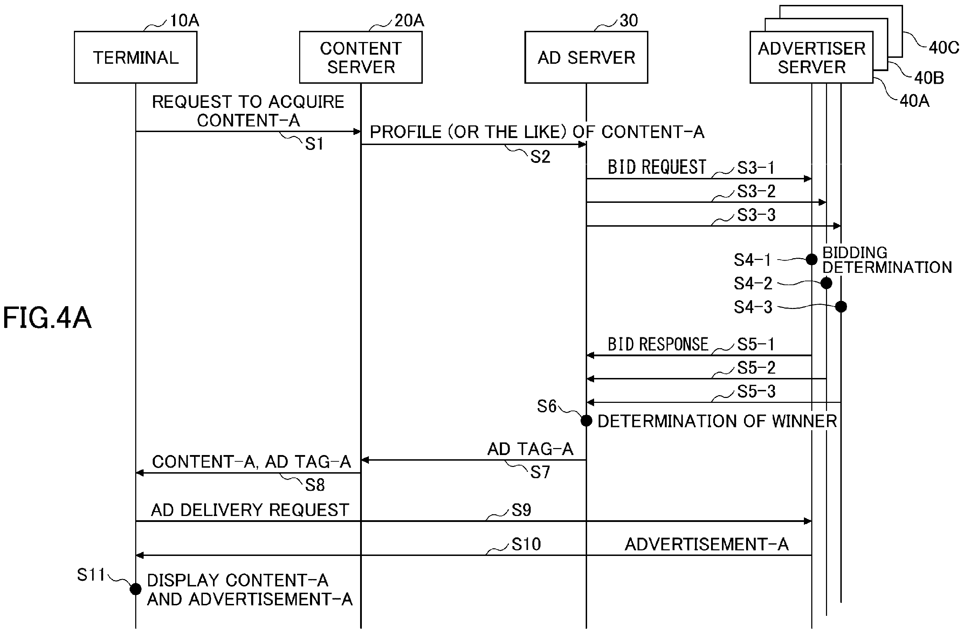

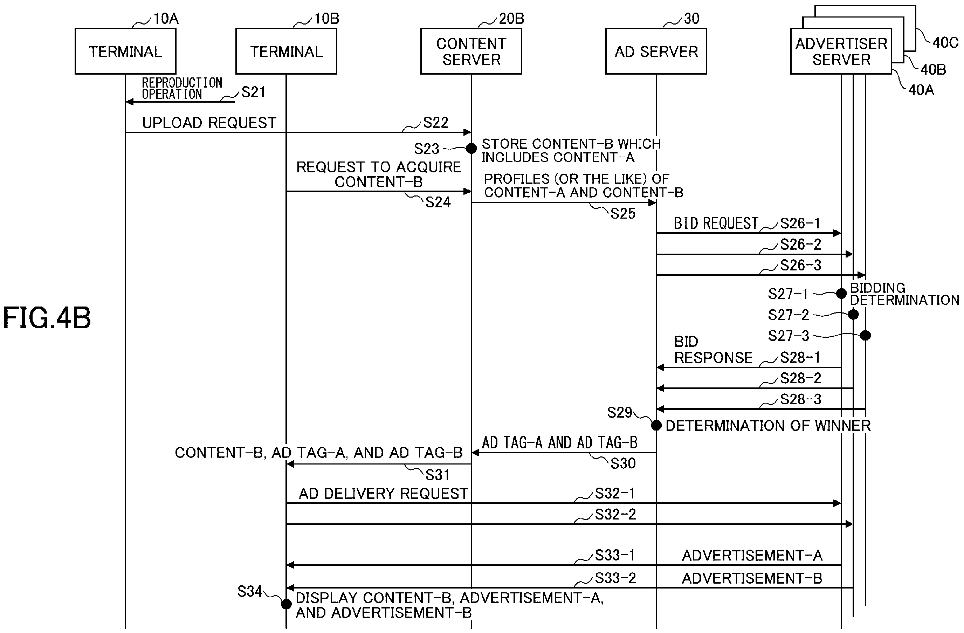

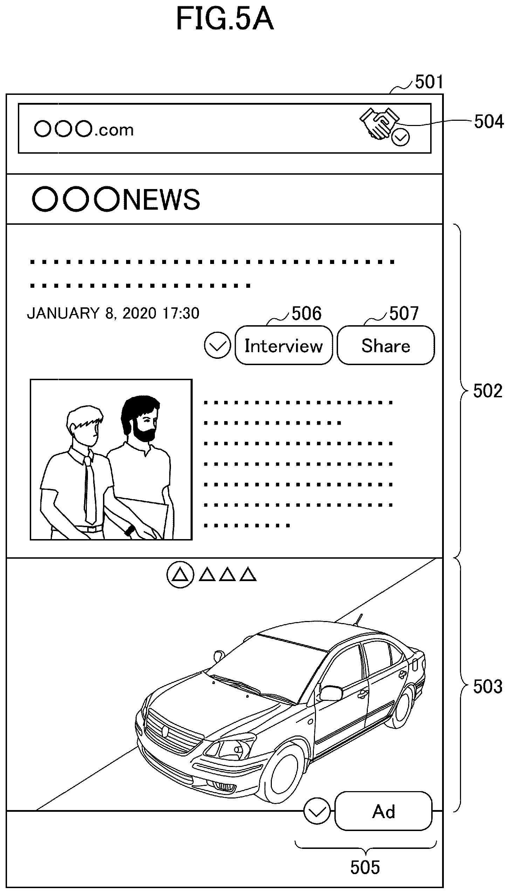

An example of the processing of the ad delivery system 1 according to the embodiment will be described with reference to FIG. 4A to FIG. 6B. FIGS. 4A and 4B are sequence diagrams illustrating an example of the processing of the ad delivery system 1 according to the embodiment. FIG. 5A to FIG. 6B each are a view for explaining an example of a display screen of the terminal 10 according to the embodiment.

### <Ad Delivery>

In step S1, the transmission/reception unit 13 of the terminal 10A transmits a request to acquire content-A (an example of "first content") to the content server 20A. The terminal 10A here transmits a request to acquire the content-A, which has been designated by a user A, in response to an operation by the user A.

Next, the transmission/reception unit 22 of the content server 20A transmits, to the ad server 30, information indicating the content-A, information related to the user A of the terminal 10A, a profile (an example of a "first profile") of the provider of the content-A, and a profile of the content-A (step S2). The content indicating the information about the content-A may include, for example, the URL of the web page on which the content-A is posted, the title of the content-A, and the like. The information related to the user A of the terminal 10A may include, for example, the history of the behavior of the user A. In such a case, the content server 20A may, for example, use a user ID, such as an email address used by the user A to log in to a predetermined web site, to acquire the history of websites browsed by the user A as the history of the behavior of the user A.

### (Profile of Content Provider)

A profile of a content provider is a profile that is provided to enable a user to determine whether the content (including the content and advertisements) provided by the provider is credible and to determine the credibility of the content. For example, a profile may be issued in advance as a digital certificate from a third-party entity to each provider, and the profile may be stored in the storage unit of each corresponding server.

Providers to which profiles may be issued may include, for example, stakeholders related directly or indirectly to the advertisement. In such a case, content providers may include, for example, providers (publishers) of media such as television, newspapers, websites, and the like, advertising providers (advertisers) providing advertisements to content, and advertising companies (ad agencies) as the creators (agents) of the advertisements. Content providers may also include, for example, bloggers who provide content via blogs and individuals who disseminate information via SNS or the like. Content providers may also include, for example, entities (platforms) that provide platforms for delivering advertising such as SSPs, ad exchanges, DSPs, and the like. The profile of each content provider may include information about the provider's name and the address of the provider that have been verified by a third-party entity or the like. The profile of each content provider may also include, for example, information such as a telephone number, an email address, an SNS account, and the like for accepting inquiries about the contents of the content. The profile of each content provider may also include, for example, an evaluation score (for example, a 5-point scale) indicating the credibility of the provider. The user can determine the credibility of the content provider based on the evaluation score, and can determine, for example, the possibility that the accessed content is fake news. As a result, the information literacy or the like of the user can be improved.

Note that the value of the evaluation score may be set by, for example, an institution whose objective is to improve trust in online media. In this case, the institution may decide the value of the evaluation score of the content provider based on the contents of answers given by the content provider with respect to questions.

Note that if the provider is a news content provider, the questions may be questions included in the questionnaire of the CEN Workshop Agreement (CWA) 17493 "Journalism Trust Initiative" (ftp://ftp.cencenelec.eu/EN/News/WS/2019/JTI/CWA174 93.pdf) offered principally by Reporters Without Borders and approved by the EU as a standard media credibility guideline. The institution can use these questions to determine, for example, how much effort each media site expends in its responsibility toward expression. Questions for providers of content (for example, advertising) other than news content may include questions which are different from the questions for news content providers.

### (Profile of Content)

The profile of the content-A may include information related to the contents of the content-A that have been set by the provider of the content-A. The information related to the contents of the content-A may include, for example, information indicating the attribute of the content-A, the name of the content-A, and the classification of the generation method of the content-A. The attribute of the content-A may include, for example, an attribute such as sports news, political news, economic news, or the like. The classification of the generation method of the content-A may include, for example, a classification such as an interview, a press conference, a column by a journalist, or the like.

The profile of the content-A may also include information (an example of "information for causing the terminal 10 to display a display screen for receiving an operation to reproduce the content together with an ad space") related to reproduction of the content-A that is set by the provider of the content-A. The information related to reproduction of the content-A may include, for example, information about a condition for permitting the reproduction of the content-A. The condition for permitting the reproduction of the content-A may include, for example, whether content-A may be reproduced when an ad space associated with the content-A (an ad space at a display position associated with the content-A) is set in the destination of reproduction and whether content-A may be reproduced when such an ad space is not set.

Next, the transmission/reception unit 32 of the ad server 30 transmits, based on information received from the content server 20A, bid requests for an advertisement for the content-A to the advertiser server 40A, the advertiser server 40B, and the advertiser server 40C (steps S3-1 to S3-3). Note that each bid request may include each piece of information received from the content server 20A and the information about the platform profile of the ad server 30.

The advertiser servers 40 that are to be the transmission destinations of the bid requests may be selected by the ad server 30 based on, for example, at least one of the profile of the provider of the content-A, the profile of the content-A, the information indicating the content-A, and the information related to the user A of the terminal 10A.

### (Determination Based on Profile of Provider of Content-A)

The ad server 30 may use, for example, the profile of the provider of the content-A to determine whether to allow each advertiser server 40 to provide an advertisement for the content-A. This will allow the entity of each advertiser server 40 to avoid providing an advertisement to content provided by an entity that does not have a predetermined profile which has been verified by a third-party entity.

In this case, the ad server 30 may determine, for example, whether the profile of the provider of the content-A is present. If the profile has not been received from the content server 20A, the ad server 30 may reject the provision of the advertisement from the advertiser server 40A. The ad server 30 may also determine, for example, whether information about a predetermined item such as an address is included in the profile. If the information about the predetermined item is not included in the profile, the ad server 30 may reject the provision of advertisements from the advertiser server 40A. As a result, it is possible to prevent an advertisement from being provided when the content provider has not been verified. Therefore, cases where an advertisement is provided to media, for example, websites, SNSs, and the like, which provide inappropriate content such as fake news, content infringing on another's copyright, content including personal information, and the like may be reduced.

### (Determination Based on Profile of Content-A)

The ad server 30 may also use, for example, the profile of the content-A to determine whether to permit each advertiser server 40 to provide an advertisement for the content-A. This may allow the entity of each advertiser server 40 to specify, to the ad server 30, the attribute of the content to which an advertisement can be provided. In this case, for example, a condition, with respect to the profile of the content-A, which has been designated by the entity of the advertiser server 40A for accepting the bid request may be registered in advance in the ad server 30. Subsequently, the ad server 30 may determine whether the profile of the content-A included in the profile of the content-A matches the condition specified by the entity of the advertiser server 40A. In this case, for example, a condition such as whether the attribute of the content-A included in the profile matches the attribute of the content-A specified by the entity of the advertiser server 40A may be determined. If it is determined that the attributes do not match, the ad server 30 may reject the provision of an advertisement from the advertiser server 40A.

Next, the ad delivery unit 43 of each advertiser server 40 determines whether to permit the bidding based on the information received from the ad server 30 (step S4-1 to S4-3). Here, in a similar manner to the processing of the ad server 30 in steps S3-1 to S3-3, the advertiser server 40A may determine whether to permit the provision of the advertisement to the content-A based on the profile of the provider of the content-A, the profile of the content-A, and the condition set in advance by the entity of the advertiser server 40A. A response to the bid request for an advertisement for the content-A may be returned (transmitted) only when the advertiser server 40A has determined to provide an advertisement for the content-A. As a result, whether to permit the provision of the advertisement can be determined also on the side of the advertiser server 40A by the entity of the advertiser server 40A. Note that the determination as to whether the provision of advertisement can be permitted may be executed in either the ad server 30 or each advertiser server 40.

In addition, the advertiser server 40A may decide the bid price for an advertisement for the content-A based on the profiles of the provider of the content-A, the profile of the content-A, and the like. In such a case, the advertiser server 40A may decide the bid price based on, for example, the information about the entity of the content server 20A, the attribute of the content-A, and the classification of the generation method of the content-A. For example, in such a case, the advertiser server 40A may decide to set a comparatively high bid price when the entity operating the content server 20A is well-known, the attribute of the content-A is economic news, and the classification of the generation method of the content-A is an interview. As a result, the entity operating the advertiser server 40A can support the publication of content that can be considered to have a high degree of appropriateness, have a high level of expertise, and have taken a relatively large amount of labor to generate the content.

Further, the advertiser server 40 A may determine the advertisement to be provided to the content-A based on, for example, the profile of the provider of the content-A and the profile of the content-A.

Next, the transmission/reception unit 42 of each advertiser server 40 returns a bid response including information about a bid price and an ad tag (steps S5-1 to S5-3). The bid response may include information about, for example, the bid price, the URL of advertising content (for example, an image or the like), and the advertiser profile and the ad agency profile associated with the advertising content and stored in the advertiser server 40A. Note that an image may include at least one of a still image and a moving image.

Next, the control unit 33 of the ad server 30 decides the winner of the bid (step S6). For example, the ad server 30 may decide here that the entity of the advertiser server 40 which submitted the highest bid price is the winner. Further, the winning bid price (advertising fee), which is to be collected from the entity of the advertiser server 40 decided to be the winner, may be decided by the ad server 30 based on, for example, the highest bid price or the second highest bid price. In the following description, assume that the entity of the advertiser server 40A has been decided as the winner.

Next, the transmission/reception unit 32 of the ad server 30 returns an ad tag-A to the content server 20A (step S7). The ad tag-A here may include information about, for example, the URL of the advertising content received from the advertiser server 40A, the platform profile of the ad server 30, the advertiser profile and the ad agency profile received from the advertiser server 40A, and the winning bid price, and the like.

Next, the content server 20A returns the content-A, the profile of the provider of the content-A, the profile of the content-A, and the ad tag-A to the terminal 10A (step S8). The transmission/reception unit 13 of the terminal 10A subsequently transmits an ad delivery request to the advertiser server 40A based on the ad tag-A (step S9). Here, the terminal 10A may send the ad delivery request to, for example, the URL of the advertising content specified by the ad tag-A. The ad delivery request also may include, for example, information about the winning bid price specified by the ad tag-A.

Next, the transmission/reception unit 42 of the advertiser server 40A delivers an advertisement-A, the profile of the provider of the advertisement-A, and the profile of the advertisement-A to the terminal 10A (step S10). Here, in a similar manner to the profile of the provider of the content-A, the profile (an advertiser profile or an advertiser provider profile: an example of a "second profile") of the provider of the advertisement-A may be issued in advance from, for example, a third-party entity to the entity of the advertiser server 40A, and the issued profile may be stored by the advertiser server 40A.

Next, as illustrated in FIG. 5A, the control unit 14 of the terminal 10A displays the content-A and the advertisement-A on a screen (step S11). In the example of FIG. 5A, the terminal 10A displays, on a display screen 501, content 502 (content-A), an advertisement 503 (advertisement-A), an object 504 indicating that a profile has been publicly issued for the provider of the content 502, an object 505 indicating that a profile has been added to the provider of the advertisement 503, an "Interview" button 506, and a "Share" button 507.

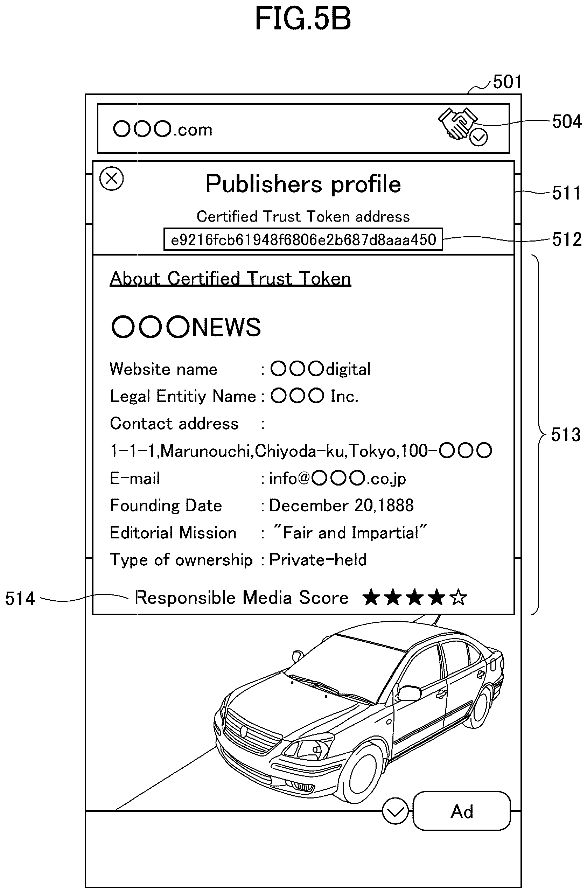

When the object 504 is pressed (touched) by the user A of the terminal 10A, the terminal 10A displays an area 511 of FIG. 5B by a pop-up window or the like. In the example of FIG. 5B, identification information 512 of the profile of the provider of the content 502 and information 513 included in the profile of the provider of the content 502 are displayed in the area 511. In the example of FIG. 5B, the name, the address, the email address, and the information about the evaluation score 514 of the provider of the content server 20A are displayed as the information 513 included in the profile of the provider of the content 502.

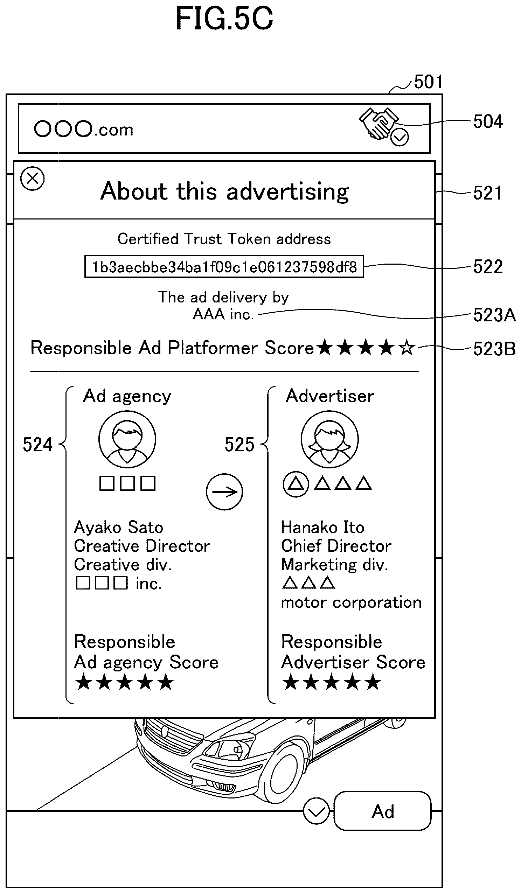

In addition, when the user A of the terminal 10A presses the object 505 indicating that a profile has been added to the provider of the advertisement 503, the terminal 10A displays an area 521 of FIG. 5C by a pop-up window or the like. In the example of FIG. 5C, identification information 522 of the profile of the advertisement 503, a name 523A of the entity of the ad server 30 included in the platform profile, and an evaluation score 523B of the platform are displayed in the area 521. Information 524, which is included in the ad agency profile, such as the name of the advertising agency which created the advertisement 503, the affiliation, the title, and the name of a person in charge, and the evaluation score of the advertising agency is also displayed in the area 521. Furthermore, information 525, which is included in the advertiser profile, such as the name of the entity providing the advertisement 503, the affiliation, the title, and the name of a person in charge, and the evaluation score of the advertiser is displayed in the area 521. Based on the displayed information, the user A of the terminal 10A can determine the credibility of the advertiser, the creator of the advertisement, and the provider of the platform delivering the advertisement. Therefore, for example, when an advertisement has been provided to the content 502 from an advertiser with a high credibility, the user A can determine that the content 502 is highly credible (that is, that the likelihood of the content 502 being fake news is low).

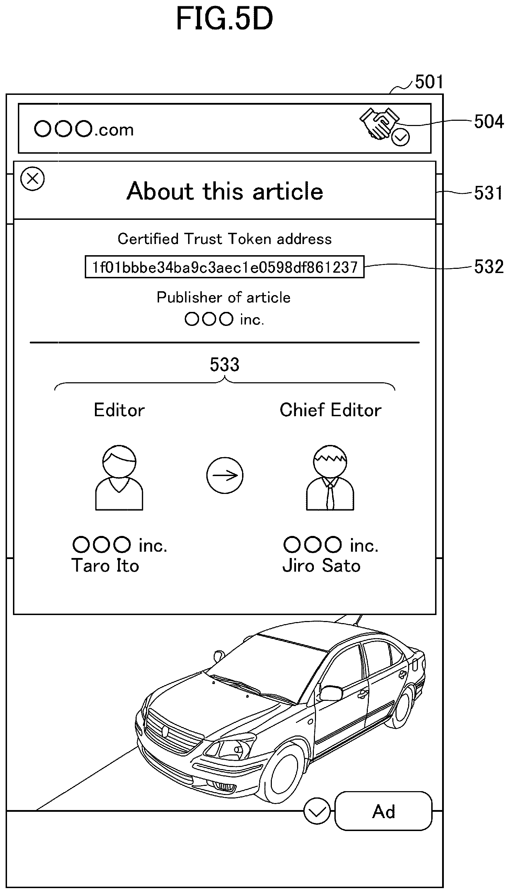

Furthermore, when the user A of the terminal 10A presses the "Interview" button 506, the terminal 10A displays an area 531 of FIG. 5D by a pop-up window or the like. In the example of FIG. 5D, identification information 532 of the profile of the content 502 and information 533 of the person in charge of the creation of the content 502 and the like which are included in the profile of the content-A are displayed in the area 531. Pressing the "Interview" button 506 displays that the content 502 includes a portion generated from an interview.

### <<Reproduction (Reposting and Sharing)>>

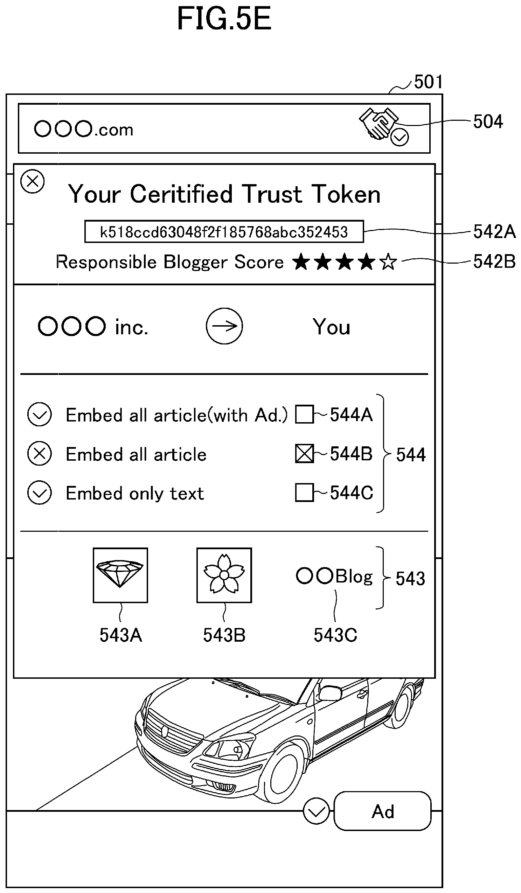

Subsequently, the reception unit 12 of the terminal 10A accepts an operation made by the user A to reproduce the content-A (step S21). Here, for example, when the "Share" button 507 of FIG. 5A is pressed, the terminal 10A displays an area 541 of FIG. 5E by a pop-up window or the like. In the example of FIG. 5E, identification information 542A of the profile (for example, the blogger profile) of the user A, an evaluation score 542B included in the profile of the user A, a display area 543 for the options of media sites as the destinations of reproduction, and a display area 544 for the options concerning the reproduction are displayed in the area 541. The display area 544 displays the options concerning the reproduction based on the information related to the reproduction of the content-A which has been set by the provider of the content-A and is included in the profile of the content-A. In the example of FIG. 5E, a check box 544A is indicated as being selectable, thus indicating that reproduction is permitted by setting an ad space associated with the content-A at the destination of the reproduction. Also, a check box 544B is indicated as being not selectable, thus indicating that reproduction is not permitted if an ad space associated with the content-A is not set at the destination of the reproduction. Furthermore, a check box 544C is indicated as being selectable, thus indicating that only the reproduction of the text which is a portion of the content-A is permitted regardless of whether an ad space associated with the content-A is set at the destination of the reproduction.

Objects 543A to 543C indicating respective media sites as the destinations for reproduction are displayed in the display area 543. Note that in a similar manner to the profile of the provider of the content-A, the profile of the user A may have been issued in advance to the user A by, for example, a third-party entity or the like and stored by the terminal 10A.

When the user A has selected an option concerning the reproduction of the content-A in the display area 544 and has selected a destination media site for the reproduction, the terminal 10B may acquire an input screen of the selected media site from the content server 20B. Subsequently, the terminal 10B may receive, via the input screen, content-C input by the user B. In the following description, assume that the content-B (an example of "second content") includes the content-A and the content-C generated by the user B.

Next, the transmission/reception unit 13 of the terminal 10A transmits an upload request concerning the content-B including the content-A to the content server 20B (step S22). Subsequently, the content server 20B stores the content-B including the content-A so that the content-B including the content-A can be delivered to each terminal 10 and the like (step S23).

The transmission/reception unit 13 of the terminal 10B thereafter transmits a request to acquire the content-B to the content server 20B (step S24). Here, for example, the terminal 10B transmits, in response to an operation by the user B, a request to acquire the content-B specified by the user B.

Next, the transmission/reception unit 22 of the content server 20B transmits the profile of the provider of the content-A, the profile of the provider of the content-B, the profile of the content-A, the profile of the content-B, the information indicating the content-A, the information indicating the content-B, and the information related to the user B of the terminal 10B to the ad server 30 (step S25).

Next, based on the information received from the content server 20B, the transmission/reception unit 32 of the ad server 30 transmits a bid request for an advertisement for the content-A included in the content-B and a bid request for an advertisement for the content-A to the advertiser server 40A, the advertiser server 40B, and the advertiser server 40C (steps S26-1 to S26-3) .

### (Bid Request for Advertisement for Content-A Included in Content-B)

The ad server 30 may select the advertiser server 40, which is to be the transmission destination of the bid request for an ad space for the content-A included in the content-B, in a manner similar to, for example, the processing by the ad server 30 in steps S3-1 to S3-3. In this case, to select the advertiser server 40 which is to be the transmission destination of the bid request for the advertisement for the content-A included in the content-B, the ad server 30 may use, for example, a condition set in advance by the entity operating each advertiser server 40 and at least one of the profile of the provider of the content-A, the profile of the content-A, the information indicating the content-A, and the information related to the user B of the terminal 10B received from the content server 20B.

### (Bid Request for Advertisement for Content-B)

The ad server 30 may also select the advertiser server 40, which is to be the transmission destination of the bid request for an ad space for the content-B, in a manner similar to, for example, the processing by the ad server 30 in steps S3-1 to S3-3. In this case, to select the advertiser server 40 which is to be the transmission destination of the bid request for an advertisement for the content-A included in the content-B, the ad server 30 may use, for example, a condition set in advance by the entity of the advertiser server 40A and at least one of the profile of the provider of the content-B, the profile of the content-B, the information indicating the content-B, and the information related to the user B of the terminal 10B received from the content server 20B.

Next, based on the information received from the ad server 30, the ad delivery unit 43 of each advertiser server 40 determines whether to permit the submission of a bid (steps S27-1 to S27-3). Here in a similar manner to, for example, the processing by the ad server 30 in steps S26-1 to S26-3, the advertiser server 40A may determine whether the provision of an advertisement to the ad space for the content-A included in the content-B is to be permitted. Subsequently, a response to the bid request for an advertisement for the content-A included in the content-B may be returned to the ad server 30 only if it is determined that the provision of an advertisement to the content-A is to be permitted.

Note that when the content-A is reproduced, the ad server 30 and the advertiser server 40A may give at least a part of the advertising fee of the advertisement, which is provided from the advertiser server 40A to the content-A at the destination of the reproduction, to the original provider (the entity of the content server 20A) of the content-A which is indicated in the profile of the provider of the content-A. In this case, for example, the ad server 30 may send at least a part of the advertising fee collected from the entity of the advertiser server 40A to the entity of the content server 20A. This allows the provider of the content-A to receive an advertising fee from the destination of the reproduction in return for permitting the reproduction of the content-A. In addition, for example, even in a case where the provider of the content-B does not have a profile issued from a third-party entity, the entity of the advertiser server 40A can provide an advertisement, from which the provider of the content-A can be given an advertising fee, to an ad space for the content-A included in the content-B.

Whether the provision of an advertisement to the ad space for the content-B is to be permitted may be determined by the advertiser server 40A in a manner similar to, for example, the processing by the ad server 30 in steps S26-1 to S26-3. Subsequently, a response to the bid request for an advertisement for the content-B may be returned to the ad server 30 only if it is determined that the provision of an advertisement to the content-B is to be permitted.

Next, the transmission/reception unit 42 of each advertiser server 40 returns a bid response including the bid price and the information about the ad tag to the ad server 30 (steps S28-1 to S28-3). Subsequently, the ad server 30 decides the winner of the bid for the advertisement space for the content-A included in the content-B and the winner of the bid for the ad space for the content-B (step S29). In the following description, assume that the entity of the advertiser server 40A has been decided to be the winner of the bid for the ad space for the content-A included in the content-B, and that the entity of the advertiser server 40B has been decided to be the winner of the bid for the ad space for the content-B.

Next, the control unit 33 of the ad server 30 returns the ad tag-A and an ad tag-B to the content server 20A (step S30). Thereafter, the transmission/reception unit 22 of the content server 20B returns the content-B including the content-A, the profile of the provider of the content-B, the profile of the content-B, the ad tag-A, and ad tag-B to the terminal 10B (step S31). Subsequently, the transmission/reception unit 13 of the terminal 10B transmits an ad delivery request to the advertiser server 40A based on the ad tag-A (step S32-1). In addition, the transmission/reception unit 13 of the terminal 10B transmits an ad delivery request to the advertiser server 40B based on the ad tag-B (step S32-2).

Next, the transmission/reception unit 42 of the advertiser server 40A delivers the advertisement-A, the profile of the provider of the advertisement-A, and the profile of the advertisement-A to the terminal 10B (step S33-1). The transmission/reception unit 42 of the advertiser server 40B delivers an advertisement-B, the profile of the provider of the advertisement-B, and the profile of the advertisement-B to the terminal 10B (step S33-2).

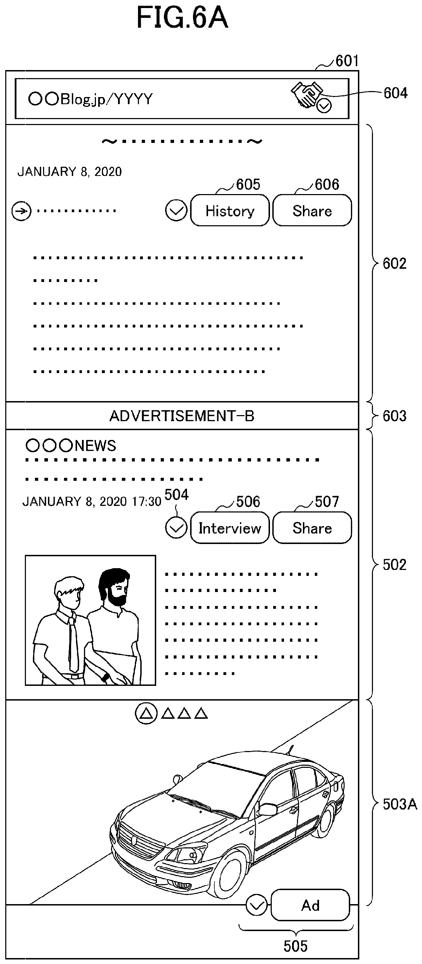

Subsequently, as illustrated in FIG. 6A, the control unit 14 of the terminal 10B displays the content-B including the content-A, the advertisement-A associated with the content-A, and the advertisement-B associated with the content-B on the screen (step S34). In the example of FIG. 6A, the terminal 10B displays content 602 (content-C), an advertisement 603 (advertisement-B) for the content 602, an object 604 indicating the issuance of a profile to the provider of the content 602, a "History" button 605, and a "Share" button 606. The terminal 10B also displays the reproduced content 502 (content-A), an advertisement 503A (advertisement-A) for the reproduced content 502, the object 504 indicating the issuance of a profile to the original provider of the reproduced content 502, an object 505A indicating that a profile has been added to the provider of the advertisement 503A, and the like.

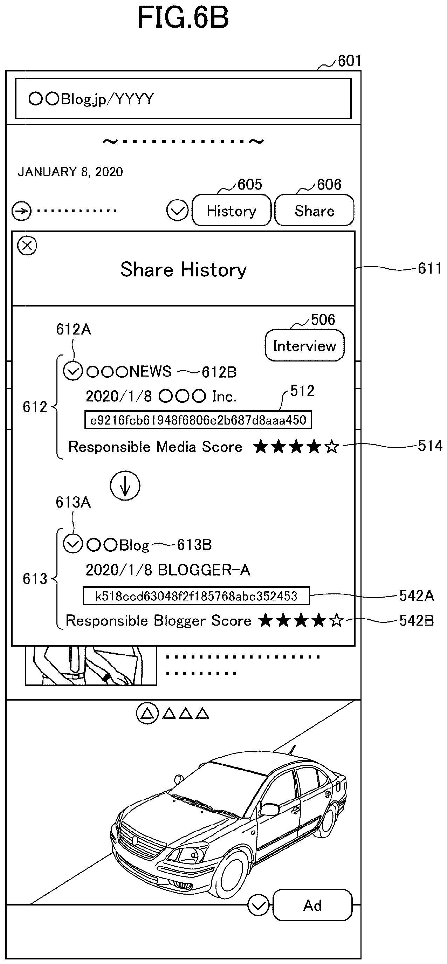

When the "History" button 605 is pressed (touched) by the user B of the terminal 10B, the terminal 10B displays an area 611 of FIG. 6B by a pop-up window or the like based on the received profiles. Note that the terminal 10B may transmit an acquisition request, which includes the identification information about the profile (for example, the publisher profile) of the provider of the reproduced content-A and the identification information about the profile (for example, the blogger profile) of the provider of the added content-C, to the ad server 30 or the log server 50. Subsequently, the ad server 30 or the log server 50 may deliver the profile specified by each piece of identification information included in the acquisition request to the terminal 10B.

In the example of FIG. 6B, a display area 612 for the information related to the original provider of the content 502 and a display area 613 for the information related to the person who reproduced the content 502 are displayed in the area 611. In the example of FIG. 6B, the "Interview" button 506 and an object 612A (504) indicating the issuance of a profile to the original provider of the content 502 are displayed in the display area 612 for the information related to the original provider of the content 502. In addition, the identification information 512 of the profile of the provider of the content 502, the evaluation score 514 of the provider of the content 502, and a name 612B of the original provider of the content 502 which are included in the publisher profile are displayed in the display area 612. Further, in the example of FIG. 6B, an object 613A indicating the issuance of a profile to the user A is displayed in the display area 613 for the information related to the person who has reproduced the content 502. Furthermore, the identification information 542A of the profile of the user A, the evaluation score 542B of the user A, and a name 613B of the blog or the like provided by the user A which are included in the blogger profile are displayed in the display area 613. Therefore, for example, even when credibility of the blogger or the like who reproduced the content 502 is low, the user B can determine that the content 502 is highly credible (that is, that the likelihood of the content 502 being fake news is low) if the credibility of the original provider of the content 502 is high.

When the "Interview" button 506 is pressed in FIGs. 6A and 6B, the terminal 10B displays the area 531 of FIG. 5D in a manner similar to the processing described above with respect to the terminal 10A. In addition, when the object 612A of FIG. 6B is pressed by the user B, the terminal 10B displays the area 511 of FIG. 5B in a manner similar to the processing described above with respect to the terminal 10A. Furthermore, when the user B presses the name 612B of the original provider of the content 502 in FIG. 6B, the terminal 10B may display the display screen 501 of FIG. 5A by accessing the content server 20A based on the URL of the link set with the name 612B.

### <Modification>

The functional units of each of the terminals 10, the content servers 20, the ad server 30, the advertiser servers 40, and the log server 50 may be implemented by, for example, cloud computing provided by one or more computers. Furthermore, a plurality of devices of the content servers 20, the ad server 30, the advertiser servers 40, and the log server 50 may be integrated as a single device.

Although the embodiment of the present disclosure has been described above, the present disclosure is not limited to the specific embodiment disclosed above, and various modifications and changes can be implemented within the spirit and the scope of the disclosure disclosed in the appended claims.

This international application is based on and claims priority of Japanese Patent Application No. 2020-045725 filed March 16, 2020, the entire contents of which are hereby incorporated by reference.

### REFERENCE SIGNS LIST

- 1: ad delivery system
- 10: terminal
- 11: storage unit
- 12: reception unit
- 13: transmission/reception unit
- 14: control unit
- 20: content server
- 21: storage unit
- 22: transmission/reception unit
- 23: content delivery unit
- 24: control unit
- 30: ad server
- 31: storage unit
- 32: transmission/reception unit
- 33: control unit
- 40: advertiser server
- 41: storage unit
- 42: transmission/reception unit
- 43: ad delivery unit
- 44: control unit
- 50: log server

## Claims

1. An ad delivery method performed by an ad delivery system for delivering an advertisement for first content to a first terminal, the ad delivery method comprising determining, based on a first profile for verifying a provider of the first content, whether to permit provision of the advertisement for the first content when the first content is requested by the first terminal.

2. The ad delivery method according to claim 1, further comprising rejecting, by the ad delivery system, the provision of the advertisement for the first content when the first profile is absent.

3. The ad delivery method according to claim 1 or 2, further comprising transmitting, to the first terminal by the ad delivery system, information for displaying both the advertisement for the first content and information included in a second profile for verifying a provider of the advertisement.

4. The ad delivery method according to any one of claims 1 to 3, further comprising deciding, by the ad delivery system and based on the first profile, a bid price for the advertisement for the first content.

5. The ad delivery method according to any one of claims 1 to 3, further comprising transmitting, to the first terminal by the ad delivery system, information about an evaluation score indicating credibility of at least one of the provider of the first content, the provider of the advertisement for the first content, a creator of the advertisement, and an entity providing a platform for delivering the advertisement.

6. The ad delivery method according to any one of claims 1 to 5, further comprising transmitting, to the first terminal by the ad delivery system, information for displaying a display screen for receiving an operation to reproduce the first content with an ad space associated with the first content.

7. The ad delivery method according to claim 6, further comprising transmitting, to a second terminal by the ad delivery system, information for displaying information included in the first profile when the first content which is reproduced from the first terminal is requested by the second terminal.

8. The ad delivery method according to claim 6 or 7, further comprising determining, by the ad delivery system and based on the first profile, whether to provide an advertisement for the first content, which is reproduced from the first terminal, to a second terminal when the first content which is reproduced from the first terminal is requested by the second terminal.

9. The ad delivery method according to claim 7 or 8, further comprising transmitting, to the second terminal by the ad delivery system, information about an evaluation score indicating credibility of a provider of the reproduced first content and information about an evaluation score indicating credibility of a user of the first terminal which reproduced the first content.

10. The ad delivery method according to any one of claims 6 to 9, further comprising giving, by the ad delivery system, at least a part of an advertising fee for an advertisement associated with the reproduced first content to the provider of the first content indicated by the first profile.

11. An ad delivery system for delivering an advertisement for first content to a first terminal, wherein the ad delivery system determines, based on a first profile for verifying a provider of the first content, whether to permit provision of the advertisement for the first content when the first content is requested by the first terminal.
